# EUROPÄISCHE PATENTSCHRIFT

(11) **EP 0 700 628 B1**
(45) Veröffentlichungstag und Bekanntmachung des Hinweises auf die Patenterteilung: **01.07.1998**
(21) Anmeldenummer: 94912510.8
(22) Anmeldetag: 23.03.1994
(51) Int. Cl.: H04Q 7/20

(54) **VERFAHREN ZUM BETRIEB EINES MOBILFUNKNETZES**
PROCESS FOR OPERATING A MOBILE RADIOTELEPHONE SYSTEM
PROCEDE PERMETTANT DE FAIRE FONCTIONNER UN RESEAU RADIOTELEPHONIQUE MOBILE

(30) Priorität: 24.05.1993 DE 4317143
(43) Veröffentlichungstag der Anmeldung: 13.03.1996
(73) Patentinhaber: DeTeMobil Deutsche Telekom MobilNet GmbH, 53227 Bonn (DE)
(72) Erfinder: RAST, Corinna, D-5300 Bonn (DE)
(74) Vertreter: Riebling, Peter, Dr.-Ing.
(86) Internationale Anmeldenummer: EP9400911
(87) Internationale Veröffentlichungsnummer: WO9428686

(56) Entgegenhaltungen:
- EP-A- 0 481 714
- WO-A-92/19078
- WO-A-93/03585
- WO-A-94/08433

## Beschreibung

Die Erfindung betrifft ein Verfahren zum Betrieb eines Mobilfunknetzes nach dem Oberbegriff des Patentanspruchs 1.

Bei der Identifizierung mit der Identifikations-Nummer, welche üblicherweise in einem Teilnehmer-Identifikations-Modul gespeichert ist, wird mit Hilfe eines ebenfalls im Teilnehmer-Identifikations-Modul gespeicherten Authentifikations-Schlüssels das Teilnehmerverhältnis überprüft. Die Teilnehmer-Identifikations-Module - kurz SIM genannt - können als Karte mit einem integrierten Schaltkreis als Speicher - im folgenden Telekarte oder auch Karte genannt - oder als Einschub-SIM ausgeführt sein.

Mit zunehmender Verbreitung von Mobilfunkgeräten tritt seitens der Teilnehmer der Wunsch auf, auch bei der Verwendung mehrerer Mobilfunkgeräte unter einer einheitlichen Rufnummer erreichbar zu sein. Bei Mobilfunknetzen nach dem GSM-Standard kann dieses hier nicht dadurch erreicht werden, daß dem Teilnehmer zwei identische Telekarten mit gleichen zugeordneten Rufnummern ausgehändigt werden. Das Sicherheitskonzept des GSM-Standards läßt es nicht zu, daß zwei identische Teilnehmer-Identifikations-Module mit identischen Identifikations-Nummern und Authentifikations-Schlüsseln hergestellt und in Betrieb genommen werden können.

Das Dokument WO 92/19078 A1 beschreibt ein Verfahren zum Betrieb eines Mobilfunknetzes, bei welchem ein Teilnehmer-Identitäts-Modul (SIM) mit mindestens zwei Benutzeridentitäten versehen wird, welche wahlweise vom Benutzer aktiviert werden können. Es kann also nur eine Benutzeridentität zur Zeit aktiv sein. Geht ein Anruf für die nicht aktive Identität ein, so wird dieser mittels der GSM-Funktion "call forwarding unconditional" (CFU) an die aktive Teilnehmeridentiät weitergeleitet. Die CFU-Funktion ist auf eine Rufweiterleitung begrenzt, so daß es bei Teilnehmern, die mehr als zwei Identitäten wünschen, Probleme aufbringt.

Aus der WO 93/03585 A1 ist ein Telekommunikationssystem beschrieben, bei welchem jedem Mobiltelefon einer bestimmten Gruppe gewisse Anrufcharakteristiken gegeben sind, welche z. B. die Zeitdauer, den Zeitpunkt und die Art eines Anrufs bestimmen. Diese Anrufparameter können zentral für jede Mobilstation gesteuert werden.

Aus der EP 0 481 714 A2 ist ein Verfahren zur Identifizierung von Teilnehmern eines zellularen Telefonnetzes bekannt geworden, bei welchem aufgezeigt ist, wie ein Benutzer der z. B. eine Austauschsmartcard zum ersten Mal benutzt, problemlos im Telefonsystem erkannt und registriert werden kann. Das Problem dabei ist, daß bei Erhalt einer Austauschsmartcard sich die Teilnehmeridentität ändert und zunächst nur dem Home Location Register (HLR) bekannt ist. Das Verfahren sieht nun vor, daß bei erstmaliger Benutzung einer Austauschsmartcard das angesprochene Visitor Location Register (VLR) die neue Identität des Benutzers sofort aus dem Home Location Register (HLR) übernimmt.

Die frühere Patentanmeldung WO 94/08433 A1, mit Prioritätsdatum vom 01. Oktober 1992, veröffentlicht am 14. April 1994, beschreibt ein digitales mobiles Telefonsystem, bei welchem jedem Teilnehmer eine Telefonnummer und mehrere Benutzer-Identitäts-Module (SIM) zugeordnet sind. Jede dieser Teilnehmerkarten ermöglicht ein Mobiltelefon für Anrufe und eingehende Gespräche zu benutzen, wobei nur eine der Teilnehmerkarten zur Zeit aktiviert sein kann, während die andere deaktiviert ist. Zur Kontrolle der Aktivierung der einzelnen Teilnehmeridentitätsmodule wird das Home Location Register (HLR) herangezogen.

Aufgabe der vorliegenden Erfindung ist es, ein Verfahren zum Betrieb eines Mobilfunknetzes anzugeben, bei welchem Teilnehmer zwei oder gegebenenfalls mehrere Funktelefone mit verschiedenen Teilnehmer-Identifikations-Modulen betreiben können und dabei unter einer einheitlichen Rufnummer erreicht werden können.

Diese Aufgabe wird erfindungsgemäß durch die technische Lehre des Anspruchs 1 gelöst.

Der Vorteil des erfindungsgemäßen Verfahrens besteht darin, daß der Teilnehmer, der zwei Telekarten erhält, über eine einheitliche Rufnummer alternativ an beiden Telekarten erreichbar ist und lediglich eine Rufnummer bekanntzugeben braucht. Auch bei abgehenden Rufen, d. h. wenn der Teilnehmer wählt, kann von beiden Karten einem angerufenen Teilnehmer mit dem Dienst "Calling Number Identification Presentation" eine identische Rufnummer präsentiert werden.

Ein weiterer Vorteil des erfindungsgemäßen Verfahrens besteht darin, daß alle besonderen Dienste, wie beispielsweise Rufweiterschaltung, die nach dem GSM-Standard zur Verfügung gestellt werden, auch bei dem erfindungsgemäßen Verfahren möglich sind.

Im Rahmen des erfindungsgemäßen Verfahrens sind an sich weitgehende Möglichkeiten mit der jeweils nicht verwendeten Telekarte (passive Karte) möglich. So kann es beispielsweise vorgesehen sein, daß abgehende Rufe mit beiden Karten gleichzeitig durchgeführt werden können. Ankommende Rufe werden jedoch lediglich zur Mobilstation mit der aktiven Karte geleitet.

Eine Weiterbildung der Erfindung besteht deshalb darin, daß bei Aktivierung einer der Datensätze der andere Datensatz deaktiviert wird. Dabei ist vorzugsweise vorgesehen, daß eine Aktivierung eines der Datensätze, während der andere Datensatz aktiv ist, nur durch Eingabe eines vorgegebenen Kommandos möglich ist.

Zur Durchführung mehrerer Dienste, wie beispielsweise Telefon und Telefax, kann bei einer anderen Weiterbildung vorgesehen sein, daß die Datensätze jeweils zwei Rufnummern bzw. zwei weitere Rufnummern für verschiedene Dienste enthalten.

Eine andere Weiterbildung des erfindungsgemäßen Verfahrens besteht darin, daß die Datensätze ferner Teilnehmer-Dienstleistungsdaten enthalten, wobei mindestens ein Teil der Benutzungsbeschränkungen bei Wechsel der Aktivierung eines der Datensätze zwischen den Datensätzen getauscht wird. Insbesondere können die Teilnehmer-Dienstleistungsdaten Informationen zur Benutzungsbeschränkung umfassen. Hierdurch ergeben sich für den Teilnehmer und den Netzbetreiber weitere Möglichkeiten, beispielsweise die Sperrung von abgehenden Rufen von der jeweils passiven Karte.

Zur Durchführung des erfindungsgemäßen Verfahrens ist es in einfacher Weise möglich, Teilnehmerdaten, die der Teilnehmer mit der aktiven Karte eingerichtet hat, auf die Anwendung mit einer neuen aktiven Karte automatisch zu übertragen. Diese Daten sind beispielsweise Rufweiterleitungseinstellungen, Benutzungsbegrenzungen einschließlich eines dazugehörigen Paßwortes sowie weitere durch die Teilnehmer veränderbare zusätzliche Dienstleistungsdaten.

Der GSM-Standard sieht eine Begrenzung der Verkettung von mehreren Rufweiterleitungen bei einem Rufaufbau vor. Diese Begrenzung liegt im D1-Netz bei 1 und tritt bei dem erfindungsgemäßen Verfahren insoweit nicht auf, als ein bereits weitergeleiteter Ruf bei passiver erster Telekarte der zweiten Telekarte zugestellt werden kann. Weitere Beschränkungen des GSM-Standards, die beispielsweise für den Dienst Rufweiterleitung gelten, liegen bei dem erfindungsgemäßen Verfahren nicht vor. So können beispielsweise "Short Messages" bei dem erfindungsgemäßen Verfahren berücksichtigt werden.

Vorzugsweise ist bei dem erfindungsgemäßen Verfahren vorgesehen, daß auch von einer Mobilstation mit nicht aktiver Identifikations-Nummer abgehende Rufe zugelassen werden.

Eine vorteilhafte Einrichtung zur Durchführung des erfindungsgemäßen Verfahrens ist dadurch gekennzeichnet, daß die durch die gegenseitigen Hinweise verknüpften Datensätze im Home Location Register des Wirknetzes abgelegt sind und daß in einem Operation Subsystem (OSS) für die Teilnehmerverwaltung zwei Teilnehmerprofile miteinander verknüpft sind.

Ein Ausführungsbeispiel der Erfindung ist in der Zeichnung anhand mehrerer Figuren dargestellt und in der nachfolgenden Beschreibung näher erläutert. Es zeigt:
- Fig. 1: eine schematische Darstellung zweier Teilnehmer-ldentifikations-Module und deren Verwendung bei dem erfindungsgemäßen Verfahren,
- Fig. 2: tabellarische Darstellungen der Datensätze für die beiden Identifikations-Nummern und
- Fig. 3: eine schematische Darstellung des Verfahrensablauf bei einem für eine Mobilstation bestimmten Ruf.

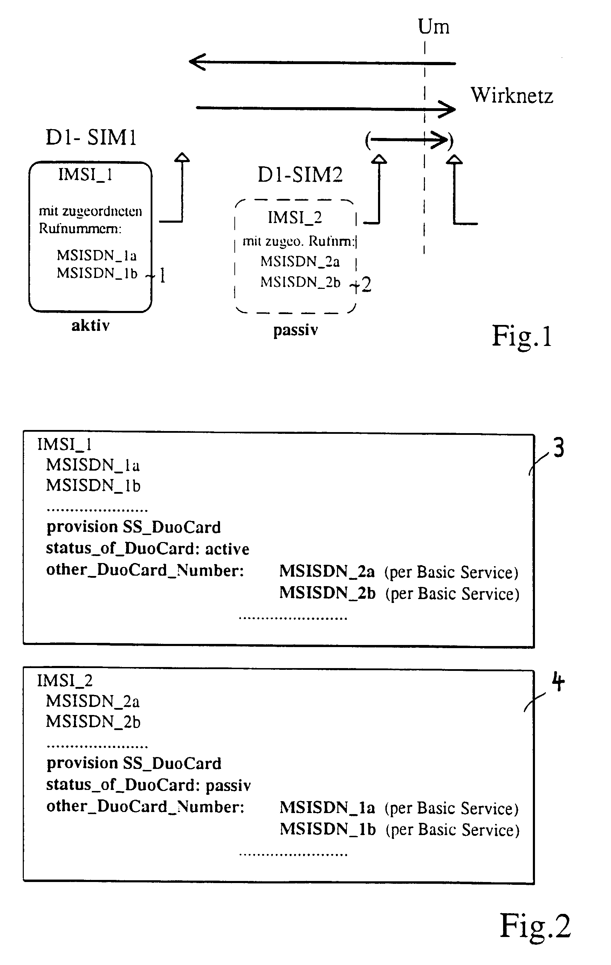

Die Durchführung des erfindungsgemäßen Verfahrens erfordert Modifikationen im Wirknetz und im Verwaltungssystem (OSS = Operation Subsystem). Innerhalb des Wirknetzes betreffen die Modifikationen das Home Location Register (HLR), in welchem die Verknüpfung der beiden Datensätze vorgenommen ist, die zu zwei Teilnehmer-Identifikations-Modulen 1, 2 (Fig. 1) gehören. Dem Teilnehmer-ldentifikations-Modul 1 sind eine Identifikations-Nummer IMSI1 und zwei Rufnummern MSISDN_1a und MSISDN_1b zugeordnet. In entsprechender Weise gehören zu dem Teilnehmer-ldentifikations-Modul 2 die Identifikations-Nummer IMSI2 und die Rufnummern MSISDN_2a und MSISDN_2b. Die Kommunikation zwischen dem Wirknetz und den Mobilfunkgeräten bzw. den Teilnehmer-ldentifikations-Modulen erfolgt über eine Funkschnittstelle Um.

Bei der Darstellung in Fig. 1 wird angenommen, daß das Teilnehmer-ldentifikations-Modul 1 aktiv ist. Von ihm sind abgehende und ankommende Rufe möglich. Von einem Mobilfunkgerät mit dem passiven Teilnehmer-ldentifikations-Modul 2 sind bei dem dargestellten Ausführungsbeispiel bzw. bei dem dargestellten Zustand lediglich abgehende Rufe möglich. Ein Wechsel zwischen beiden Telekarten kann vom Teilnehmer durch eine Aktivierungsmeldung beliebig gesteuert werden.

Die zur Durchführung des erfindungsgemäßen Verfahrens erforderlichen Modifikationen im Wirknetz betreffen ausschließlich die Funktionalität im Home Location Register. Die Signalisierungsprotokolle bleiben unverändert, denn sowohl in der Phase 1 als auch in der Phase 2 des GSM-Standards wird der Austausch von unstrukturierten Daten von einer Mobilstation zum Home Location Register unterstützt. Die Funktionalität im Wirknetz sieht ein transparentes Verhalten gegenüber unstrukturierten Daten vor, so daß auch hier keine Änderungen in der Spezifikation erforderlich werden, wenn auf die Generierung von Rechnungsaufzeichnungen zur Verrechnung der Teilnehmeraktivierung verzichtet wird.

Im Verwaltungssystem OSS erfolgt eine Teilnehmer-Datenverwaltung, wobei zur Durchführung des erfindungsgemäßen Verfahrens das Teilnehmerprofil um zwei Datensätze erweitert wird, das heißt, es werden zwei Teilnehmerprofile miteinander verknüpft und die entsprechenden Daten zum Home Location Register übertragen. Da bei dem bestehenden System bereits mehrere Teilnehmerverhältnisse für jeweils einen Kunden vorgesehen sind, sind diesbezüglich keine Änderungen erforderlich. Es ist lediglich eine möglicherweise besondere Gebühr für Teilnehmer mit mehreren Karten, die unter einer Rufnummer erreicht werden können, vorzusehen.

Fig. 2 zeigt auszugsweise zwei Datensätze, die zur Durchführung des erfindungsgemäßen Verfahrens miteinander verknüpft sind. Der Dienst, der mit dem erfindungsgemäßen Verfahren erbracht wird, wird im folgenden DUO CARD genannt. Im ersten Datensatz 3 sind die Daten des ersten Teilnehmer-ldentifikations-Moduls 1 (Fig. 1) abgelegt. Beim Einrichten eines Teilnehmerverhältnisses werden die Felder "provision SS_DuoCard", "status_of_DuoCard" und "other_Duocard_Number" gesetzt, wenn die Provision für "DuoCard" gegeben ist, so ist der Dienst automatisch aktiv. Der Datensatz 4 für das zweite Teilnehmer-ldentifikations-Modul 2 (Fig. 1) ist entsprechend angelegt. Für eine Identifikations-Nummer ist der Status aktiv, für die andere passiv.

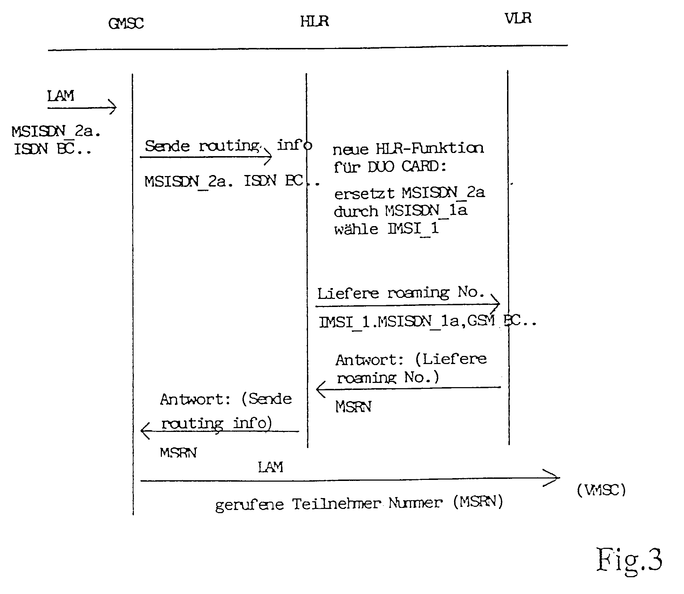

Im folgenden wird anhand von Fig. 3 der Aufbau einer Verbindung am Beispiel eines aus einem Festnetz eintreffenden und für eine Mobilstation bestimmten Rufes erläutert. Der Ruf IAM tritt an einer Schnittstelle GMSC zwischen einem Festnetz und dem Mobilfunknetz ein und enthält beispielsweise die Rufnummer MSISDN_2a und die Parameter ISDN BC.., welche die Art des Dienstes bestimmen - beispielsweise Fernsprechen oder Telefax.

Von dort erfolgt eine Anfrage "Send Routing Info" an das Home Location Register HLR. Im Falle einer Provision für den Zusatzdienst DUO CARD und passivem Status für die MSISDN_2a wird die Rufnummer MSISDN_2a durch MSISDN_1a ersetzt und die IMSI_1 ausgewählt. Damit wird im Visitor Location Register VLR eine "Roaming Number" ermittelt und diese an das Home Location Register übergeben, von wo die vollständige Routing Information an die Schnittstelle GMSC gegeben wird. Von dort aus wird die Verbindung über das jeweilige Visited Mobil Services Switching Center VMSC aufgebaut.

Die Aktivierung durch den Teilnehmer erfolgt mit Process_Unstructured_SS-Data von der Mobilstation transparent zum Home Location Register. Dies ist mit GSM-Phase 1 und GSM-Phase 2 möglich. Zunächst wird im Home Location Register die Provision für DUO CARD überprüft und der Status abgefragt. Die Aktivierung für eine aktive Karte wird ignoriert. Bei Aktivierung einer passiven Karte wird der status_of_DuoCard für beide Identifikations-Nummern umgesetzt.

Sollen abgehende Gespräche bei Benutzung der passiven Karte verhindert werden, wird "Operator Barring für DuoCard" von dem allgemeinen "Operator Barring" unterschieden. Es wird dazu im Home Location Register überprüft, ob "Operator Barring" bei der bis dahin aktiven Karte gesetzt ist - das heißt, ob das allgemeine "Operator Barring" initiiert wurde. In diesem Fall bleibt status_of_DuoCard für beide Identifikations-Nummern unverändert. Im anderen Fall wird "Operator Barring" für die neue passive Karte gesetzt und bei der neuen aktiven Karte gelöscht.

Es ist auch möglich, bei der Aktivierungsprozedur bestimmte Teilnehmerdaten im Home Location Register zu aktualisieren und Werte von der alten aktiven auf die neue aktive Identifikations-Nummer zu übernehmen: z.B. Call-Forwarding-Einstellungen (Rufweiterleitungen), Call-Barring-Einstellungen (Benutzungsbeschränkungen) mitsamt dem Paßwort, sowie weitere Supplementary Service-Daten.

Es entstehen keine wechselseitigen Einschränkungen zwischen den Call-Forwarding-Diensten und dem Dienst DUO CARD. Eine HLR-DUO CARD-Umlenkung auf eine Rufnummer der anderen DUO CARD hat keinen Einfluß auf den Ablauf der Call-Forwarding-Services. Es ist nicht erforderlich, bei einer Call-Forwarding-Registration des Teilnehmers zu überprüfen, ob als Umleitungsziel eine Rufnummer der anderen DUO CARD eingegeben wurde. Sollen jedoch die Call-Forwarding-Einstellungen bei der Aktivierungsmeldung für DUO CARD von einer Identifikations-Nummer auf die andere Identifikations-Nummer übernommen werden, kann der Fall eintreten, daß für eine Identifikations-Nummer eine Rufumleitung auf die eigene Rufnummer im Home Location Register gespeichert wird. Da die maximale Anzahl von Rufumleitungen pro Verbindung im D1-Netz auf 1 begrenzt ist, sind die Auswirkungen aus Netzbetreibersicht akzeptabel. Die Konsequenzen für den Kunden sind ebenfalls gering - bei aktiviertem Call Forwarding On No Reply auf die aktive Karte würde der Ruf gegebenenfalls zweimal zugestellt werden.

Weiterhin ist es möglich, bei gehenden Rufen von beiden Karten dem gerufenen Teilnehmer mit "Calling Line Identification Presentation" eine identische Rufnummer zu präsentieren. Dann können die Rufnummern der Zweitkarte gegenüber Dritten vollkommen verborgen bleiben. Um dies zu realisieren, muß eine gemeinsame Rufnummer (BASIC MSISDN) für beide Identifikations-Nummern vom Home Location Register zur Verfügung gestellt werden, eine Änderung der HLR-Funktion "Selection of BASIC MSISDN" wird damit erforderlich, gegebenenfalls auch eine Modifikation in der Teilnehmerdatenverwaltung des DPPS (Data Post Processing System).

## Patentansprüche

1. Verfahren zum Betrieb eines Mobilfunknetzes, bei dem Mobilstationen mit Hilfe einer von der Mobil station an das Mobilfunknetz übertragenen Identifikationsnummer (IMSI_1), die einem Teilnehmer-Identifikations-Modul (SIM1) zugeordnet ist, dadurch aktiviert werden, daß nach Prüfung dieser Identifikationsnummer (IMSI_1) in einem der Identifikationsnummer (IMSI_1) zugeordneten Datensatz (3), in welchem mindestens die Identifikationsnummer (IMSI_1), mindestens eine zugehörige Rufnummer (MSISDN_1a, MSISDN_1b) und Teilnehmer-Dienstleistungsdaten abgelegt sind, ein Statusfeld (status_of_DuoCard) auf "aktiv" gesetzt wird, und bei Eintritt eines Verbindungswunsches mit einer Rufnummer vom Mobilfunknetz geprüft wird, ob diese Rufnummer aktiv ist, wobei zutreffendenfalls ein Verbindungsaufbau unter Verwendung der Rufnummer erfolgt, **dadurch gekennzeichnet**, daß in dem Datensatz (3) ein Hinweis auf einen weiteren Datensatz (4) abgelegt ist, der einem weiteren Teilnehmer-Identifikations-Modul (SIM2) zugeordnet ist, und der eine weitere Identifikationsnummer (IMSI_2), mindestens eine weitere Rufnummer (MSISDN_2a, MSISDN_2b), ein weiteres Statusfeld (status_of_DuoCard), Teilnehmer-Dienstleistungsdaten und ein Hinweis auf den Datensatz (3) umfaßt, und
daß bei Eintreffen eines Verbindungswunsches mit der Rufnummer, wenn diese nicht aktiv ist, ein Verbindungsaufbau unter Verwendung des weiteren Datensatzes (4) erfolgt, sofern dieser aktiv ist, und
mindestens ein Teil der Dienstleistungsdaten bei Wechsel der Aktivierung eines der Datensätze (3,4) zwischen den Datensätzen (3,4) getauscht werden.

2. Verfahren nach Anspruch 1, **dadurch gekennzeichnet**, daß bei Aktivierung eines der Datensätze der andere Datensatz deaktiviert wird.

3. Verfahren nach Anspruch 2, **dadurch gekennzeichnet**, daß eine Aktivierung eines der Datensätze, während der andere Datensatz aktiv ist, nur durch Eingabe eines vorgegebenen Kommandos möglich ist.

4. Verfahren nach einem der vorhergehenden Ansprüche, **dadurch gekennzeichnet**, daß die Datensätze jeweils zwei Rufnummern bzw. zwei weitere Rufnummern für verschiedene Dienste enthalten.

5. Verfahren nach Anspruch 4, **dadurch gekennzeichnet**, daß die Teilnehmer-Dienstleistungsdaten Informationen zur Benutzungsbeschränkung umfassen.

6. Verfahren nach Anspruch 5, **dadurch gekennzeichnet**, daß auch von einer Mobilstation mit nicht aktiver Identifikations-Nummer abgehende Rufe zugelassen werden.

7. Verfahren nach einem der vorhergehenden Ansprüche, dadurch gekennzeichnet, daß die durch die gegenseitigen Hinweise verknüpften Datensätze im Home Locations Register des Wirknetzes abgelegt sind und daß ein in einem Operation Subsystem (OSS) für die Teilnehmerverwaltung zwei Teilnehmerprofile miteinander verknüpft sind.

## Claims

1. A method for the operating of a mobile radio network, in which mobile stations are activated by means of an identification number (IMSI_1) transmitted from the mobile station to the mobile radio network, which number is associated with a user identification module (SIM1), in that after examination of this identification number (IMSI_1) in a data set (3) associated with the identification number (IMSI_1), in which at least the identification number (IMSI_1), at least one associated call number (MSISDN_1a, MSISDN_1b) and user service data are deposited, a status field (status_of_DuoCard) is set to "active", and on entry of a connection request with a call number from the mobile radio network, checking is carried out as to whether this call number is active, wherein if applicable the establishing of a connection is carried out using the call number, characterised in that in the data set (3) a reference to a further data set (4) is deposited, which is associated with a further user identification module (SIM2), and which comprises a further identification number (IMSI_2), at least one further call number (MSISDN_2a, MSISDN_2b), a further status field (status_of_Duocard), user service data and a reference to the data set (3), and
that on occurrence of a connection request with the call number, when the latter is not active, a connection is established using the further data set (4), in so far as this is active, and at least a portion of the service data are exchanged on changing the activation of one of the data sets (3, 4) between the data sets (3, 4).

2. A method according to Claim 1, characterised in that on activation of one of the data sets, the other data set is deactivated.

3. A method according to Claim 2, characterised in that an activating of one of the data sets, whilst the other data set is active, is only possible through the input of a given command.

4. A method according to one of the preceding claims, characterised in that the data sets respectively contain two call numbers or two further call numbers for different services.

5. A method according to Claim 4, characterised in that the user service data comprise information concerning the restriction to use.

6. A method according to Claim 5, characterised in that calls are also permitted originating from a mobile station with non-active identification number.

7. A method according to one of the preceding claims, characterised in that the data sets linked by the reciprocal references are deposited in the home locations register of the effective network and that in an operation subsystem (OSS) for user management, two user profiles are linked with each other.

## Revendications

1. Procédé pour l'exploitation d'un réseau radiotéléphonique mobile selon lequel des stations mobiles sont activées, à l'aide d'un numéro d'identification (IMSI_1) qui est transmis par la station mobile audit réseau et qui est affecté à un module d'identification d'abonnés (SIM1), de telle sorte qu'après le contrôle de ce numéro d'identification (IMSI_1) dans un enregistrement logique (3) qui est affecté à ce numéro d'identification (IMSI_1) et dans lequel sont déposés au moins le numéro d'identification (IMSI 1), au moins un numéro d'appel correspondant (MSISDN_1a, MSISDN_1b) et des données de prestation d'abonnés, une zone d'état (status_of_DuoCard) est placée sur "actif", et lors de l'arrivée d'une intention d'appel avec un numéro d'appel, le réseau radiotéléphonique mobile contrôle si ce numéro d'appel est actif, moyennant quoi, si c'est le cas, une communication est établie en utilisant le numéro d'appel, **caractérisé** en ce qu'une indication concernant un autre enregistrement logique (4) est déposée dans l'enregistrement logique (3), laquelle indication est affectée à un autre module d'identification d'abonnés (SIM2) et comprend au moins un autre numéro d'identification (IMSI_2), au moins un autre numéro d'appel (MSISDN_2a, MSISDN_2b), une autre zone d'état (status_of_DuoCard), des données de prestation d'abonnés et une indication concernant l'enregistrement logique (3), et
en ce que lors de l'arrivée d'une intention d'appel avec le numéro d'appel, si celui-ci n'est pas actif, une communication est établie en utilisant l'autre enregistrement logique (4), dans la mesure où celui-ci est actif, et une partie au moins des données de prestation d'abonnés sont échangées entre les enregistrements logiques (3, 4) lors du changement d'activation de l'un des enregistrements logiques (3, 4).

2. Procédé selon la revendication 1, **caractérisé** en ce que lors de l'activation de l'un des enregistrements logiques, l'autre enregistrement logique est désactivé.

3. Procédé selon la revendication 2, **caractérisé** en ce qu'une activation de l'un des enregistrements logiques alors que l'autre enregistrement logique est activé n'est possible que grâce à l'entrée d'un ordre prédéfini.

4. Procédé selon l'une des revendications précédentes, **caractérisé** en ce que les enregistrements logiques contiennent deux numéros d'appel et deux autres numéros d'appel pour des services différents.

5. Procédé selon la revendication 4, **caractérisé** en ce que les données de prestation d'abonnés comprennent des informations destinées à limiter l'utilisation.

6. Procédé selon la revendication 5, **caractérisé** en ce que même des appels provenant d'une station mobile avec un numéro d'identification non actif sont autorisés.

7. Procédé selon l'une des revendications précédentes, **caractérisé** en ce que les enregistrements logiques reliés par les indications mutuelles sont déposés dans le Home Location Register (enregistreur de localisation nominal) du réseau actif, et en ce que dans un Operation Subsystem (OSS) (sous-système d'exploitation) pour la gestion des abonnés, deux profils d'abonnés sont reliés entre eux.
